(19) Europäisches Patentamt
European Patent Office
Office européen des brevets

(11) Numéro de publication: **0 182 695**
**B1**

(12) # FASCICULE DE BREVET EUROPÉEN

(45) Date de publication du fascicule du brevet: **18.05.88**

(51) Int. Cl.[4]: **B 60 V 3/06**

(21) Numéro de dépôt: **85402099.7**

(22) Date de dépôt: **31.10.85**

(54) **Navire à effet de surface à quilles latérales comportant des moyens de sustentation perfectionnés.**

(30) Priorité: **12.11.84 FR 8417169**

(43) Date de publication de la demande: **28.05.86 Bulletin 86/22**

(45) Mention de la délivrance du brevet: **18.05.88 Bulletin 88/20**

(84) Etats contractants désignés: **DE GB IT NL SE**

(56) Documents cité:
**FR-A-2 422 535**
**US-A-4 046 217**
**US-A-4 090 459**
**US-A-4 137 987**

(73) Titulaire: **ETAT- FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées (FR)**

(72) Inventeur: **Banquet, Robert- Jean, 35, Rue Le Marois, F-75016 Paris (FR)**
Inventeur: **De Smet, Victor, 1, rue des Etats Unis, F-91300 Massy (FR)**
Inventeur: **Bertrand, Jean- Paul, 15, Bd Exelmans, F-75016 Paris (FR)**
Inventeur: **Guezou, Jean- Pierre, 11, Clos Peraul, F-91200 Athis Mons (FR)**
Inventeur: **Marcouyoux, Sylvain, Le Verger Debeauvoir Villa No. 2, F-83200 Le Pradet (FR)**

**EP 0 182 695 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention concerne les navires comportant une structure sustentée par des coussins de fluide sous pression dits navires à effet de surface.

La présente invention concerne plus précisément les navires à effet de surface du type comportant une structure sustentée munie de deux quilles latérales, un dispositif de fermeture arrière et un dispositif de fermeture avant aptes à coopérer avec les quilles latérales pour délimiter un coussin central de sustentation alimenté par des moyens générateurs d'air sous pression.

On a déjà tenté de réaliser de tels navires à effet de surface à quilles latérales.

Les brevets US-A-3 977 491, 3 987 865, et 4 090 459, ainsi que les brevets GB-A-1 210 973, 1 242 131, ou encore le brevet FR-A-2 422 535 illustrent par exemple différentes approches théoriques de ces dispositifs.

Toutefois, en pratique, les tentatives actuelles n'ont pas donné pleinement satisfaction en ce qui concerne le confort en pilonnement du navire dans toutes les conditions de mer, le suivi de la houle, la limitation des fuites et des variations de débits de fuites sur la périphérie des coussins, le franchissement d'éventuels obstacles.

Les inventeurs ont déterminé en particulier que les problèmes précités rencontrés avec les réalisations jusqu'ici proposées étaient dûs pour une grande part aux modes d'alimentation du coussin central et des dispositifs de fermeture respectivement avant et arrière de tels navires.

D'une façon générale, les moyens jusqu'ici proposés pour délimiter le coussin central de sustentation des navires à effet de surface à quilles latérales comprennent, à l'avant, une jupe multilobée généralement verticale ouverte vers le coussin central, et à l'arrière une enceinte d'extension horizontale.

Le plus souvent, l'enceinte constituant la fermeture arrière est totalement séparée du coussin central et reliée aux moyens générateurs d'air sous pression par des conduits associés. L'alimentation en air sous pression de l'enceinte est totalement séparée du coussin central.

Selon d'autres propositions moins communes, le dispositif de fermeture avant et le dispositif de fermeture arrière-jupe multilobée et enceinte horizontale sont alimentés par des générateurs d'air sous pression séparés et respectivement associés, tandis que le coussin central est alimenté indirectement par l'intermédiaire des dispositifs de fermeture avant et arrière.

Par rapport au document FR-A-2 422 535 qui décrit déjà un navire à effet de surface du type comportant une structure sustentée munie de deux quilles latérales, un dispositif de fermeture arrière et un dispositif de fermeture avant aptes à coopérer avec les quilles latérales pour délimiter un coussin central de sustentation alimenté par un générateur d'air sous pression, des premiers moyens formant conduits reliant l'enceinte et le générateur d'air sous pression, pour assurer le gonflage de l'enceinte, des seconds moyens formant conduits reliant le générateur d'air sous pression au coussin central pour assurer une alimentation principale de celui-ci, la fermeture arrière étant réalisée au moins partiellement en un matériau souple, comprend au moins une enceinte d'extension horizontale délimitée vers l'avant par un voile interne incliné vers le haut en rapprochement du centre du coussin central, l'invention est caractérisée par le fait que :

- des moyens de communication sont prévus entre l'enceinte et le coussin central pour assurer une alimentation secondaire de celui-ci, les moyens formant conduits ainsi que les moyens de communication étant adaptés pour assurer le gonflage de l'enceinte sous une pression supérieure à la pression du coussin central et en combinaison le générateur présente une caractéristique de fonctionnement pression/débit à faible pente pour contribuer à limiter les variations de pression dans le coussin quelles que soient les conditions de navigation.

Selon l'invention, les moyens formant conduits et les moyens de communication sont adaptés pour déterminer une perte de charge relative μAR entre l'enceinte et le coussin central comprise entre 0,07 et 0,15, la perte de charge relative μAR étant plus précisément définie par la relation :

$$\mu AR = (Pb_{AR} - Pc) / Pb_{AR'}$$

dans laquelle :

- $Pb_{AR}$ représente la pression moyenne en statique dans l'enceinte et,
- Pc représente la pression en statique dans le coussin central.

Des essais opérés sur une telle structure de sustentation conforme à la présente invention ont montré que simultanément le rendement du système et le confort en pilonnement du navire étaient nettement améliorés par rapport aux propositions antérieures, sans nécessiter la mise en oeuvre d'une part de moyens actifs de contrôle et d'asservissement et d'autre part d'une puissance installée surdimentionnée par rapport à celle nécessaire en fonctionnement moyen.

Les dispositions conformes à la présente invention permettent en particulier de réaliser une auto-adaptation automatique rapide et optimale des pressions relatives dans les fermetures et le coussin central, quelles que soient les conditions de fonctionnement, les fermetures selon l'invention permettant pour des fréquences élevées de rencontre avec la houle de minimiser les variations de débit de fuite, et la faible pente de la caractéristique du générateur d'air permettant quant à elle, de limiter les fluctuations de pression liées aux variations de volume du coussin apparaissant aux basses fréquences de rencontre.

Selon une caractéristique préférentielle de l'invention, la fermeture arrière est formée par superposition d'une pluralité de chambres adjacentes d'extension horizontale, en

communication.

Un tel empilage réalise une suspension à plusieurs étages qui permet un meilleur contrôle du débattement vertical de la fermeture.

Selon une autre variante de réalisation préférentielle conforme à la présente invention, l'enceinte est formée d'une paroi extérieure formée d'une pluralité de lobes d'extension horizontale reliés chacun à la structure sustentée par des liens et dont le lobe supérieur est relié directement à la structure, et d'un lobe inférieur comportant un prolongement interne incliné vers le haut en rapprochement du centre du coussin central.

Le cas échéant, le générateur d'air sous pression peut, être divisé en au moins 2 unités reliées chacune d'une part à l'enceinte par l'intermédiaire de premiers moyens formant conduits, d'autre part au coussin central par l'intermédiaire de seconds moyens formant conduits. Une telle division du générateur d'air sous pression en au moins deux unités est utilisée en particulier pour les navires de surface importante demandant en conséquence un coussin de sustentation important.

Un autre avantage de cette disposition est de permettre de garantir la tenue de conditions de navigation satisfaisantes avec une seule unité en défaillance de la seconde unité de génération d'air.

Selon la présente invention, les moyens de communication reliant l'enceinte de la fermeture arrière au coussin central sont prévus soit dans le prolongement interne du lobe inférieur incliné vers le haut en rapprochement du centre du coussin central, soit en position adjacente à la surface inférieure de la structure sustentée, entre l'extrémité supérieure dudit prolongement interne du lobe inférieur et la surface inférieure précitée de la structure sustentée.

De façon préférentielle, des panneaux semi-planants généralement horizontaux à l'utilisation, sont fixés sur la partie inférieure de l'enceinte.

Selon une autre caractéristique avantageuse de l'invention, des orifices de vidange sont ménagés dans la partie inférieure de l'enceinte.

Par ailleurs, les inventeurs ont déterminé que pour optimiser le confort en pilonnement du navire, il convenait d'utiliser un générateur d'air sous pression tel que la conductance statique globale du système d'alimentation $(dQ/dPc)_N$ au point nominal de fonctionnement satisfasse à la relation $(dQ/dPc)_N \geqslant 2{,}5\ (Q/Pc)_N$ où Q est le débit total de sustentation et Pc est la surpression relative du coussin central.

De préférence, le générateur d'air sous pression est un ventilateur du type hélicocentrifuge ou équivalent, ceci dans le but d'optimiser le rendement global du système de sustentation sans augmenter de façon prohibitive la puissance installée tout en réalisant les conditions désirées au sein du coussin central.

Pour ce faire, le type de ventilateur choisi est définie par tel que sa vitesse spécifique de rotation Nsq définie par

$$N_{sq} = N.Q_v^{1/2} \cdot \left(\frac{P_v}{\rho}\right)^{-3/4}$$ où:

- N est la vitesse de rotation du ventilateur en tours/minute,
- $Q_v$ est le débit de sustentation du ventilateur,
- $P_v$ est la pression délivrée par le ventilateur,
- $\rho$ est la masse volumique de l'air,

est inférieure à 70, de préférence voisine de 35 et éventuellement même très inférieure à 35 dans le cas de dispositifs de ventilateur multi-étagés.

L'ensemble de ces dispositifs permettent d'utiliser des ventilateurs de faible diamètre dont l'intégration dans l'architecture du navire est compatible avec les nécessités d'emménagement imposées.

De plus, selon une caractéristique avantageuse de l'invention, les moyens formant conduits comprennent une canalisation à embranchement dont le tronc commun est raccordé au générateur d'air sous pression, une première branche généralement rectiligne qui constitue les premiers moyens formant conduits est raccordée à l'enceinte, et une seconde branche incurvée, qui constitue les seconds moyens formant conduits, est raccordée au coussin central. En alimentant ainsi l'enceinte de la fermeture arrière par la liaison la plus directe, on réduit au maximum les pertes de charge alimentant la fermeture arrière.

De préférence, selon l'invention, un volet mobile est inséré sur la canalisation au niveau de l'embranchement pour régler la répartition du débit d'air issu du générateur entre les deux branches.

Selon une autre caractéristique intéressante de l'invention, un système de volets est disposé sur les seconds moyens formant conduits. Un tel système de volets qui peut aisément être commandé à partir du poste de pilotage du navire permet de maintenir en toute sécurité une pression dans la fermeture arrière supérieure à celle du coussin central.

Les inventeurs se sont également préoccupés de perfectionner les fermetures avant d'un navire à effet de surface à quilles latérales précédemment existantes.

A cet effet, le navire à effet de surface précité conforme à la présente invention possède une fermeture avant réalisée au moins partiellement en matériau souple, qui comprend une enceinte supérieure d'extension horizontale, s'étendant transversalement entre les deux quilles latérales, qui communique avec le coussin central pour être alimentée par celui-ci, et deux rangées de jupes inférieures multilobées raccordées en-dessous de l'enceinte supérieure, en s'étendant transversalement entre les deux quilles latérales, qui convergent vers le centre du coussin central de haut en bas et dont la concavité est dirigée vers le centre du coussin, les deux rangées délimitant par ailleurs entre elles des chambres intermédiaires qui communiquent avec l'enceinte supérieure grâce à des orifices ménagés dans la paroi de celle-ci.

Ainsi, selon l'invention, on obtient, sans intervention extérieure, l'auto-adaptation de la fermeture avant aux conditions de variation de la surface libre, afin d'une part de limiter le contact des jupes avec l'eau, ce qui réduit leur traînée propre et leur usure, et d'autre part, de réduire les variations de débit de fuites et donc les variations de pression dans le coussin. Tout cela conduit bien entendu à améliorer le confort en pilonnement du navire.

Selon une autre caractéristique importante de l'invention, la structure sustentée présente à l'avant une paroi inclinée vers le haut en éloignement du centre du coussin central, et l'enveloppe de l'enceinte supérieure, convexe vers l'extérieur, est raccordée tangentiellement sur cette paroi inclinée. Comme cela sera évoqué plus en détail par la suite, la raideur de la suspension avant est liée à l'inclinaison de la paroi précitée sur l'horizontale, et peut de ce fait aisément être contrôlée.

Selon une autre caractéristique de l'invention, la fermeture avant comprend en outre une enveloppe complémentaire disposée sur l'avant de l'enceinte supérieure associée et raccordée d'une part à l'extrémité supérieure de la rangée de jupes la plus avant, d'autre part sur l'avant de la structure sustentée.

Selon une autre caractéristique avantageuse de l'invention, les orifices ménagés dans l'enceinte supérieure de la fermeture avant pour assurer l'alimentation de celle-ci à partir du coussin central et l'alimentation des chambres intermédiaires à partir de l'enceinte supérieure sont adaptés pour assurer en statique une pression de l'enceinte du même ordre de grandeur que la pression dans le coussin central et une pression dans les chambres intermédiaires comprise entre 0,3 fois et 0,75 fois la pression du coussin central.

Afin d'autoriser selon un deuxième mode de fonctionnement, la navigation sur coque du navire conforme à la présente invention, des moyens de relevage sont prévus sur les fermetures avant et arrière.

Ces moyens de relevage peuvent être avantageusement formés de câbles fixés d'une part à la partie inférieure des fermetures, et d'autre part sur des treuils associés.

Par ailleurs, afin de limiter les fuites d'air entre les quilles latérales et les extrémités en regard des fermetures avant et arrière qui ne peuvent être raccordées à ces dernières, des éléments souples formant bavette sont disposés sur les extrémités latérales des fermetures, pour glisser sur la paroi latérale interne des quilles respectivement associées.

D'autrès caractéristiques et avantages de la présente invention apparaîtront à la lecture de la description détaillée qui va suivre et en regard des dessins annexés donnés à titre d'exemples non limitatifs et sur lesquels:

- la figure 1 représente une vue schématique en coupe partielle longitudinale verticale d'un navire à effet de surface à quilles latérales conforme à la présente invention,
- la figure 2 représente une vue transversale avant du même navire,
- la figure 3 représente une vue schématique partielle de dessous, de la portion avant d'un navire à effet de surface à quilles latérales conforme à la présente invention,
- la figure 4 illustre schématiquement en vue de dessus les moyens générateurs d'air sous pression intégrés à un navire à effet de surface à quilles latérales conforme à la présente invention,
- la figure 5 illustre schématiquement une première variante de réalisation de la fermeture arrière conforme à la présente invention, selon une vue en coupe verticale longitudinale,
- la figure 6a illustre schématiquement une seconde variante de réalisation d'une fermeture arrière conforme à la présente invention, selon une vue en coupe verticale similaire,
- la figure 6b illustre le comportement de la fermeture arrière conforme à la seconde variante de réalisation représentée sur la figure 6a, lors d'une élévation relative de la surface libre,
- la figure 7 représente une troisième variante de réalisation d'une fermeture arrière conforme à la présente invention selon une vue en coupe verticale longitudinale,
- la figure 8 illustre une vue schématique en perspective d'une fermeture avant conforme à la présente invention,
- la figure 9 illustre une première variante de réalisation d'une fermeture avant conforme à la présente invention selon un plan de coupe vertical longitudinal,
- la figure 10 illustre schématiquement une seconde variante de réalisation d'une fermeture avant conforme à la présente invention selon un plan de coupe vertical longitudinal similaire,
- la figure 11 illustre une troisième variante de réalisation d'une fermeture avant conforme à la présente invention selon un plan de coupe vertical longitudinal similaire,
- la figure 12 représente une vue latérale agrandie des baguettes antifriction latérales d'étanchéité illustrées sur la figure 8,
- la figure 13 représente une vue des mêmes baguettes latérales selon une section généralement horizontale,
- les figures 14a, 14b et 14c, 14d représentent schématiquement le comportement d'un navire selon l'invention respectivement sur une houle de très grande longeur d'onde, une houle de longueur d'onde intermédiaire et sur des houles courtes.

On a représenté sur les figures, en particulier sur les figures 1 à 3, un navire à effet de surface 10 conforme à la présente invention comprenant une structure sustentée 12 munie de deux quilles latérales 20 et comportant par ailleurs un dispositif de fermeture arrière 100 et un dispositif de fermeture avant 200 aptes à coopérer avec les quilles latérales 20 pour délimiter un coussin central de sustentation 300 alimenté par un générateur d'air sous pression, ou ventilateur 50.

La géometrie de là structure sustentée 12

représentée sur les figures ne doit bien entendu aucunement être considérée comme limitative. Il en est de même pour la géométrie des quilles latérales 20.

On notera cependant que, comme représenté sur la figure 1, la surface inférieure 14 de la structure sustentée 12 est pour l'essentiel généralement horizontale, à l'exception d'une portion, la plus avant, référencée 16 sur la figure 1 qui est inclinée vers le haut en éloignement du centre du coussin central 300.

Par ailleurs, selon le mode de réalisation représenté sur les figures, en particulier sur la figure 2, les surfaces internes latérales 22 des quilles 20 s'étendent généralement verticalement au droit des fermetures.

On va maintenant décrire la fermeture arrière 100 et les moyens d'alimentation associés à celle-ci.

Cette fermeture arrière comprend pour l'essentiel une enceinte d'extension horizontale, s'étendant transversalement au navire entre les deux quilles 20.

Le volume interne de l'enceinte 100 est relié au générateur d'air sous pression 50 précité grâce à des premiers moyens formant conduits 54, dont la géométrie sera décrite plus en détail par la suite, qui débouchent dans un orifice 56, ménagé dans la paroi inférieure de la structure sustentée 12 au-dessus de l'enceinte 100, comme représenté sur la figure 1. De préférence, les premiers moyens formant conduits sont équipés d'un système d'aubage (figure 1).

Des orifices de communication 150 sont par ailleurs prévus sur l'avant de l'enceinte 100 de telle sorte que l'alimentation en air sous pression du coussin central 300 soit réalisée partiellement par l'intermédiaire de l'enceinte arrière 100.

Cette enceinte est délimitée vers l'avant, comme représenté par exemple sur la figure 1 par un voile interne 102 (convexe vers le coussin à l'utilisation) incliné vers le haut en rapprochement du centre du coussin central.

Différentes variantes de réalisation de l'enceinte 100 sont susceptibles d'être retenues selon l'invention. Plusieurs de ces variantes sont illustrées sur les figures 5 à 7.

Selon le mode de réalisation illustré sur la figure 5 (qui est généralement similaire à celui illustré sur la figure 1), l'enceinte 100 est limitée par une paroi extérieure arrière 110, par le voile avant 102 précité, et latéralement par les deux parois verticales internes des quilles latérales.

Plus précisément, la paroi arrière extérieure 110 est formée d'une pluralité de lobes 112, 114, 116 d'extension horizontale. Les lobes 112, 114, 116 sont convexes vers l'extérieur.

Chaque lobe 112, 114 et 116 peut par exemple être constitué par une surface généralement cylindrique à génératrice horizontale, ces surfaces étant raccordées tangentiellement deux à deux.

Des câbles 118, 120 relient chacun des lobes 112, 114, 116 à la structure sustentée 12. Plus précisément, les câbles 118, 120 précités relient les zones communes à deux lobes adjacents 112, 114, 116 à un point 18 de la surface inférieure 14 de la surface sustentée, disposé vers l'avant par rapport à la paroi extérieure arrière 110. Le point 18 précité peut avantageusement être prévu au voisinage de l'extrémité supérieure du voile avant 102.

Les câbles 118, 120 peuvent le cas échéant être remplacés par des parois fortement ajourées reliant également les lobes 112, 114 et 116 à la surface inférieure 14 de la structure sustentée. De telles parois ajourées sont fonctionnellement équivalentes aux câbles 118, 120.

Selon le mode de réalisation représenté sur la figure 1, les orifices de communication 150 sont prévus dans le voile avant 102 sensiblement à mi-hauteur de celui-ci.

Selon le mode de réalisation représenté sur la figure 5, les orifices de communication 150 reliant le volume interne de l'enceinte 100 au coussin central 300 sont adjacents à la surface inférieure 14 de la structure sustentée 12.

Selon cette première variante de réalisation représentée sur les figures 1 et 5, à chaque instant, la pression est la même dans tout le volume de l'enceinte 100.

Selon le mode de réalisation représenté sur la figure 6a, la fermeture arrière 100 est formée de plusieurs chambres superposées, au nombre de deux en l'espèce selon le mode de réalisation représenté, référencées respectivement 122 et 124.

Outre les surfaces latérales verticales de délimitation, parallèles au plan de la figure 6a, la chambre supérieure 122 est délimitée par une paroi arrière convexe vers l'extérieur, par exemple cylindrique de révolution, 126, solidaire d'un voile généralement plan 128 incliné vers le haut en rapprochement du centre du coussin central 300.

La paroi 126 précitée, s'étend généralement horizontalement transversalement au navire entre les deux quilles latérales 20. La génératrice horizontale supérieure de la paroi 126 est raccordée à la surface inférieure 14 de la structure sustentée 12, tandis que la génératrice horizontale inférieure de la même paroi 126 est raccordée au voile 128, ce dernier étant par ailleurs, par son extrémité avant raccordé à la surface inférieure de la structure sustentée 12.

La chambre inférieure 124 est délimitée par le même voile 128, une paroi extérieure 130 convexe vers l'extérieur, d'extension générale horizontale, par exemple cylindrique de révolution, et le voile 102 précité. L'orifice 56 en liaison avec les moyens formant conduits 54 ménagés dans la structure sustentée 12 débouche dans la chambre supérieure 122. Cette dernière communique par l'intermédiaire d'orifices 132 ménagés dans le voile intermédiaire 128 avec la chambre inférieure 124.

Par ailleurs, les orifices de communication 150 reliant le volume interne de la fermeture arrière 100 et du coussin central 300 sont ménagés, de façon similaire au mode de réalisation represente

sur la figure 5, en position adjacente à la surface inférieure 14 de la structure sustentée 12.

Les orifices 132 sont dimensionnés pour assurer à l'équilibre le gonflage des chambres séparées 122, 124 à la même pression.

Néanmoins, comme cela est illustré sur la figure 6b, en dynamique, sous l'effet des variations de volume des différentes enceintes, les pressions dans chaque enceinte 122, 124 prennent des valeurs distinctes.

Dans le cas par exemple d'une élévation relative de la surface libre 1, la pression à l'intérieur de la chambre inférieure 124 sera supérieure à la pression régnant à l'intérieur de la chambre supérieure 122, dans la mesure où celle-ci est directement en liaison par l'intermédiaire des orifices de communication 150 avec le coussin central 300. Selon le mode de réalisation représenté sur la figure 7, la fermeture arrière 100 est constituée de trois chambres 134, 136 et 138, superposées. Dans la suite, ces chambres seront dénommées respectivement supérieure, intermédiaire et inférieure.

Ces trois chambres comprennent respectivement une paroi arrière, convexe vers l'extérieur, d'extension horizontale, par exemple cylindrique de révolution, référencée respectivement 140, 142 et 144.

La génératrice supérieure de la paroi 140 est raccordée à la surface inférieure 14 de la structure sustentée. La génératrice inférieure de la paroi 140 est reliée à la génératrice supérieure de la paroi 142 adjacente. La génératrice inférieure de cette dernière est reliée à la génératrice supérieure de la paroi 144 sous-jacente, tandis que la génératrice inférieure de cette dernière est prolongée par le voile interne 102 précité.

Par ailleurs, la chambre supérieure 134 est séparée de la chambre intermédiaire 136 par une toile 146 inclinée vers le haut en rapprochement du centre du coussin central, raccordée d'une part en commun aux parois 140 et 142 arrière, et d'autre part à la surface inférieure 14 de la structure sustentée 12, vers l'avant.

De façon similaire, la chambre intermédiaire 136 est séparée de la chambre inférieure 138 par une toile 148 inclinée vers le haut en rapprochement du centre du coussin central 300 et raccordée d'une part en commun aux parois 142 et 144, et d'autre part à la surface inférieure 14 de la structure sustentée 12, vers l'avant.

Selon le mode de réalisation représenté sur la figure 7, les toiles 146 et 148 et le voile 102 sont raccordés en commun à la surface inférieure 14 de la structure sustentée, en 18.

L'ouverture 56 au niveau de laquelle débouchent les premiers moyens formant conduits 54 est disposée en regard de la chambre supérieure 140. Des premiers orifices 152 sont prévus dans la toile 146, et des seconds orifices 154 sont prévus dans la toile 148, pour assurer d'une part une communication entre la chambre supérieure 140 et la chambre intermédiaire 136, et d'autre part entre cette dernière et la chambre inférieure 138.

Par ailleurs, les orifices de communication 150 précités sont prévus dans le voile 102, sensiblement à mi-hauteur de celui-ci.

Les orifices 152 et 154 sont dimensionnés pour assurer une perte de charge de la chambre supérieure 134 vers la chambre inférieure 138.

Il en résulte que les différentes chambres 134, 136 et 138 sont gonflées à des pressions différentes.

Sur les figures, l'alimentation de la fermeture arrière 100 par les premiers moyens formant conduits 54 est illustrée par les flèches référencées A.

Comme cela est représenté sur les figures, le coussin central 300 délimité par les quilles latérales 20, la fermeture avant 200 et la fermeture arrière 100 est également relié directement au générateur d'air sous pression 50 par l'intermédiaire d'un conduit référencé 58 sur les figures débouchant dans le coussin central au niveau d'un orifice 60 ménagé dans la paroi inférieure de la structure sustentée 12.

Le cas échéant, le générateur d'air sous pression 50 peut être divisé en au moins deux unités reliées chacune d'une part par l'intermédiaire de seconds moyens formant conduits 58 au coussin central 300, d'autre part par l'intermédiaire de premiers moyens formant conduit 54 à l'enceinte 100.

Cette disposition est illustrée en particulier sur la figure 4 pour laquelle deux ventilateurs 50 associés chacun à un ensemble de conduits 54, 58 sont représentés respectivement de part et d'autre de l'axe longitudinal 0-0 du navire. Sur cette figure 4, les ventilateurs et conduits associés sont assortis respectivement d'indice a et b selon leur position en regard de l'axe longitudinal 0-0.

Dans le cas où la structure sustentée est constituée par un caisson de liaison intercoque, les unités (50a, 50b) et les premiers et les seconds moyens formant conduits (54a, 54b, 58a, 58b) sont disposés à l'intérieur dudit caisson, les moyens formant conduit étant réalisés selon une disposition sensiblement horizontale.

Les unités 50a, 50b sont constituées par des ventilateurs à axe vertical dont l'ouïe d'aspiration est disposée horizontalement à la partie supérieure du caisson, formant pont.

Dans un tel cas, les ventilateurs 50 et circuits 54 - 58 associés sont de préférence symétriques en regard de l'axe longitudinal 0-0 et fonctionnent en parallèle.

Plus précisément, selon le mode de réalisation préférentiel représenté sur la figure 4, l'air prélevé dans l'atmosphère par chaque ventilateur 50, comme illustré schématiquement par les flèches référencées P sur la figure 1, est canalisé à la sortie du ventilateur 50 dans une canalisation à embranchement 52.

Chaque ventilateur est avantageusement équipé d'un clapet anti-retour 62 à sa sortie lorsque plusieurs unités sont prévues en parallèle. En outre, lors d'un fonctionnement au

moyen d'une seule unité, le clapet de la seconde unité (hors fonctionnement) sera maintenu fermé.

Plus précisément encore, la canalisation à embranchement 52 précitée comprend un tronc commun 64 et deux branches 54, 58 précédemment évoquées.

Le tronc commun 64 est relié à la sortie du ventilateur 50 associé.

Une première branche 54 de la canalisation, généralement rectiligne pour réduire au maximum les pertes de charge, débouche dans l'orifice 56, en regard de l'enceinte 100 de la fermeture arrière, au travers d'un système d'aubage 56a, 56b destinés notamment à orienter l'air de façon judicieuse vers la fermeture arrière.

Enfin, la seconde branche 58 incurvée, qui débouche dans l'orifice 60 alimente le coussin central 300.

Un volet ajustable 70 situé à l'embranchement entre les canalisations 54 et 58, schématiquement illustré sur la figure 4, permet de régler la répartition du débit entre les deux canalisations.

Par ailleurs, de préférence, un système de volets 72 comprenant une pluralité de volets montés à pivotement autour d'axes horizontaux, et commandés à pivotement en position à partir du poste de pilotage du navire, est prévu au niveau de l'orifice 60.

Le système de volets 72 permet de maintenir une pression dans la fermeture arrière 100 supérieure à celle du coussin central 300.

Ce système assure également la fermeture de la sortie d'air 60 lors de la navigation sur coque du navire comme cela sera exposé par la suite.

Comme on l'a précédemment évoqué, selon l'invention, pour optimiser le confort en pilonnement du navire dans toutes les conditions de mer, le générateur d'air sous pression 50 présente des caractéristiques statiques variation de pression d'air/variation de débit, en sortie, qui aux points nominaux de fonctionnement aient la plus faible pente possible. Plus précisément, les caractéristiques variation de pression/variation de débit des ventilateurs sont, selon l'invention, inférieures à 1/10ème de $Pa/m^3/sec$.

Pour ce faire, selon l'invention, les ventilateurs 50 sont avantageusement des ventilateurs hélicocentrifuges ou équivalents.

On sait que le fonctionnement dynamique d'un ventilateur, illustré par la courbe variation de pression/variation de débit est caractérisé par des boucles fermées, centrées sur la caractéristique statique. Cette courbe par ailleurs s'aplatit aux basses fréquences en se rapprochant de la caractéristique statique tandis que la même courbe évolue vers des formes généralement elliptiques aux fréquences élevées.

Ainsi, comme cela est représenté aux figures 14a, b, c, d :

. Sur les houles de très grande longeur d'onde ($\lambda / L \geqslant 4{,}5$) où L est la longueur du coussin et $\lambda$ la longueur d'onde de la houle, le navire de par la portance archimédienne des coques et la faible pente de houle apparente suit la déformée libre 14a) ;

. Sur les houles intermédiaires ($4{,}5 \geqslant \lambda / L \geqslant 1{,}2$) les excitations dues aux variations de volume de coussin (effet piston) et aux variations de hauteur de fuite sous les fermetures sont maximales. Se produisant à relativement basse fréquence, ces excitations n'induisent, compte-tenu de la caractéristique plate des ventilateurs que des variations modérées de la pression du coussin (fig. 14b et c) ;

. Sur les houles plus courtes, le navire suit le niveau moyen de la surface libre. Le rôle des suspension des fermetures est alors de limiter les fluctuations du débit de fuite et par conséquent les variations de pression (fig. 14d).

Cela permet d'optimiser le confort en pilonnement du navire.

Comme cela à été précédemment évoqué, le coussin central 300 est alimenté en partie directement par le ventilateur 50 (par l'intermédiaire du conduit 58), en partie indirectement, par l'intermédiaire de la fermeture arrière 100.

Sur les figures, ces alimentations directe et indirecte du coussin sont illustrées respectivement par les flèches référencées B et C.

Les sections des conduits 54, 58, des orifices associés 56, 60 et des orifices ménagés dans les parois de l'enceinte arrière 100 (orifices référencés 150, 152 et 154) sont dimensionnées pour maintenir dans l'enceinte 100 une pression constamment supérieure à la pression régnant dans le coussin central 300.

Plus précisément encore, selon l'invention, les moyens formant conduit 54, 58 et les orifices de communication 150 sont adaptés pour déterminer une perte de charge relative $\mu AR$ entre l'enceinte 100 et le coussin central 300 comprise entre 0,07 et 0,15. La perte de charge relative $\mu AR$ est définie par la relation : $\mu AR = (Pb_{AR} - Pc) / Pb_{AR}$ dans laquelle :

- $Pb_{AR}$ représente la pression moyenne en statique dans l'enceinte 100 et,
- Pc représente la pression en statique dans le coussin central 300.

La caractéristique précitée permet d'optimiser l'efficacité de la suspension due aux coussins de sustentation tout en minimisant la puissante totale de sustentation.

Pour autoriser le fonctionnement du navire soit sous forme d'un navire à effet de surface sustenté par un coussin de fluide sous pression, soit en navigation sur coque, des moyens sont prévus pour autoriser le relevage de la fermeture arrière 100.

Selon le mode de réalisation représenté sur la figure 1, ces moyens de relevage comprennent des câbles ou sangles 190 associés à des moyens formant treuil 192, disposés sur la structure sustentée 12.

Plus précisément, les câbles 190 qui s'étendent généralement verticalement à l'intérieur de la fermeture arrière sont reliés d'une part en extrémité inférieure, au point bas de l'enceinte 100, en 194, d'autre part sur le treuil 192 ; en

traversant à cet effet un alésage 30 prévu dans la paroi inférieure de la structure sustentée 12.

Pour limiter néanmoins les fuites entre les quilles latérales 20 du navire et les extrémités latérales de la fermeture arrière 100, des éléments souples 180 formant bavette sont de préférence disposés sur les extrémités latérales de l'enceinte 100. Ces bavettes sont destinées à glisser sur la paroi latérale de quille qui leur est associée, tout en assurant l'étanchéité.

De façon avantageuse, la géométrie de ces bavettes correspond étroitement à la géométrie, considérée en section longitudinale verticale, de la paroi extérieure de l'enceinte.

De telles bavettes qui sont appuyées contre les quilles latérales 20 grâce à la pression interne de la fermeture arrière contribuent à la rigidité transversale de la fermeture.

On distingue également sur la figure 1 des panneaux généralement horizontaux 160 disposés sur la partie inférieure de l'enceinte 100 et mis au contact de l'eau.

Ces panneaux 160 remplissent une triple fonction. Ils remplissent tout d'abord une fonction planante. L'effort qui s'exerce sur ces panneaux lors de contacts avec la surface libre a tendance à faire s'effacer la fermeture arrière.

De plus, ces panneaux 160 renforcent la partie inférieure de l'enceinte 100 et limite l'usure de celle-ci. Enfin, ces panneaux 160 canalisent le débit de fuite de façon à réduire la trainée.

On notera également la présence d'orifices de vidange 162 dans la partie inférieure de la fermeture arrière. Ces orifices 162 peuvent être ménagés par exemple dans une zone inférieure commune au voile 102 et aux panneaux 160. Nous allons maintenant décrire la structure de la fermeture avant 200 représentée sur les figures.

Nous allons décrire maintenant la structure de la fermeture avant 200 représentée sur les figures.

Cette fermeture avant 200 comprend pour l'essentiel une enceinte supérieure d'extension horizontale 210 et deux rangées de jupes multilobées, supportées en partie inférieure de celle-ci, référencées respectivement 230 et 250 d'une façon générale.

L'enceinte supérieure 210, selon le mode de réalisation représenté sur les figures, est composée d'une part d'une paroi inférieure 212, généralement horizontale, qui est raccordée à l'arrière à la surface inférieure 16 de la structure sustentée 12, en 213, et qui se prolonge vers l'avant par une paroi 214, convexe vers l'extérieur et inclinée généralement vers le haut, raccordée à la surface inférieure 16 de la structure sustentée 12 en 216.

La paroi 214 précitée peut être par exemple cylindrique de révolution, à génératrice horizontale.

Par ailleurs, comme représenté sur les figures, le bord supérieur de la paroi avant 214 qui est dirigée vers l'arrière, se raccorde tangentiellement à la surface inclinée 16 de la structure sustentée 12.

Bien entendu, pour assurer la fermeture avant du coussin central 300, l'enceinte supérieure 210 précitée s'étend transversalement au navire, la longueur de ladite enceinte 210, considérée transversalement à l'axe longitudinal 0-0 étant sensiblement égale à la longueur séparant les deux quilles latérales 20.

Il en est de même pour les deux rangées de jupes 230 et 250 précitées.

La jupe 230 la plus arrière est formée d'une pluralité de lobes 232 généralement cylindriques, dont les axes convergent vers le centre du coussin, de haut en bas, comme représenté sur les figures, la concavité des lobes 232 étant ouverte vers le coussin central 300, c'est-à-dire vers l'arrière du véhicule, pour éviter l'écopage.

Plus précisément, les lobes 232 sont délimités par des enveloppes hémi-cylindriques prolongées vers l'arrière par des voiles de maintien 234 parallèles à l'axe longitudinal 0-0 du navire.

Plus précisément, selon le mode de réalisation représenté, les voiles 234 sont de forme triangulaire, et raccordés par leur bord supérieur à la paroi 212 généralement horizontale de l'enceinte supérieure 210.

La jupe la plus avant 250 est formée d'un même nombre de lobes 252.

Ces lobes 252 sont disposés respectivement en regard des lobes 232 précités, sur l'avant de ceux-ci.

Là encore, les lobes 252, généralement hémi-cylindriques convergent vers le centre du coussin central 300 de haut en bas. La concavité des lobes 252 est ouverte vers le coussin central 300, soit vers l'arrière du navire, afin d'éviter l'écopage.

Les lobes 252 précités sensiblement hémi-cylindriques, se prolongent vers l'arrière par des voiles plans 254, parallèles à l'axe longitudinal 0-0 du navire, et raccordés d'une part par leur bord supérieur à la paroi 212 de l'enceinte supérieure 210, et d'autre part par l'intermédiaire de leur bord libre arrière incliné sur la verticale, au niveau de la ligne d'adjacence 236 des lobes arrière 232, comme représenté en particulier sur la figure 3.

On notera néanmoins que selon le mode de réalisation represente sur les figures, les lobes 252 sont raccordés en extrémité supérieure sur l'enceinte 210 par l'intermédiaire d'une liaison sensiblement rectiligne et horizontale.

De ce fait, comme représenté en vue de face sur 1 figure 2, l'enveloppe des lobes 252 apparaît sous forme d'une combinaison d'une part d'un triangle généralement plan supérieur dont la base définie la liaison avec l'enceinte supérieure 210 et la' pointe est dirigée vers le bas, et d'autre part de deux secteurs coniques raccordés de part et d'autre du triangle précité.

Les deux jupes 230 et 250 précédemment évoquées délimitent entre elles une série de chambres intermédiaires référencées 254.

Ces chambres 254 communiquent avec l'enceinte supérieure 210 par l'intermédiaire

d'orifices 220. D'autre part, cette dernière communique avec le coussin central 300 par des orifices 218 ménagés dans la paroi 212 de l'enceinte 210.

Selon une caractéristique importante de la présente invention, les orifices 218 assurant une communication entre l'enceinte supérieure 210 et le coussin central 300 sont déterminés de telle sorte que la pression régnant dans l'enceinte supérieure 210 soit sensiblement égale à la pression dans le coussin central 300, en statique.

Par ailleurs, les orifices 220 assurant une communication entre l'enceinte supérieure 210 et les chambres intermédiaires 254 sont dimensionnés pour assurer une perte de charge telle que la pression en statique, à l'intérieur des chambres intermédiaires 254 soit comprise entre 0,3 fois et 0,75 fois la pression du coussin central 300. Les chambres intermédiaires 254, constituent ainsi une zone de transition entre la pression du coussin central 300 et la pression atmosphérique extérieure. Cette disposition permet de réduire la résistance de vague du coussin.

Par ailleurs, les inventeurs ont constaté que les valeurs relatives préférentielles de pression ci-dessus évoquées permettent d'assurer constamment un développement optimum des jupes 230 et 250, quelles que soient les conditions de navigation.

Comme cela est illustré sur les figures 9 à 11, l'inclinaison sur l'horizontale de la surface inclinée avant 16 de la structure sustentée 12, sur laquelle se raccorde l'extrémité supérieure de la paroi 214, peut selon les applications, prendre diverses valeurs.

Le choix de l'inclinaison est déterminé en fonction de la raideur de la suspension souhaitée, sachant que la raideur de la suspension est liée directement à l'inclinaison de la surface 16 par rapport à l'horizontale.

L'homme de l'art comprend en effet aisément que, lorsque la surface 16 présente une faible inclinaison sur l'horizontale, comme représenté sur la figure 9, lors d'une élévation relative de la surface libre par rapport au navire, la mise en contact de la paroi avant 214 et de la paroi incliné 216 limite fortement le débattement vers le haut de la fermeture avant. La raideur de la suspension est alors importante.

Lorsque comme représente sur la figure 10, l'inclinaison sur l'horizontale de la surface 16 de la structure sustentée 12 est moyenne, le débattement vers le haut de la fermeture avant est renforcé. La souplesse de la suspension est alors supérieure.

Enfin, dans un cas extrême, lorsque comme représenté sur la figure 11, la surface 16 précitée est divisée en une première section 16B faiblement inclinée sur l'horizontale, prolongée vers l'avant par une seconde section 16A sensiblement verticale, sur laquelle est raccordée la paroi 214 précitée de l'enceinte supérieure 110, un fort débattement vers le haut de l'enceinte supérieure 210 et de l'ensemble de la fermeture avant est autorisé en cas d'une élévation relative de la surface libre. La souplesse de la suspension est alors optimum.

Comme cela est représenté sur la figure 1, le cas échéant, une enveloppe complémentaire 260 peut être disposée sur l'avant de l'enceinte supérieure 210, en étant réccordée d'une part en 262 à l'extrémité supérieure de la rangée de jupes 250 la plus avant, et d'autre part, en 264 sur le tableau avant de la structure sustentée.

De préférence, cette enveloppe complémentaire 260 convexe vers l'extérieur est formée d'une enveloppe cylindrique de révolution à génératrice horizontale.

L'enveoppe complémentaire 260 est alors reliée à l'enveloppe supérieure 210 par l'intermédiaire d'orifices ménagés dans la paroi 214 et non représentés sur les figures pour simplifier l'illustration.

Par ailleurs, afin d'autoriser le fonctionnement du navire, soit par sustentation et sur coussin à fluide sous pression, soit en navigation sur coque, là encore des moyens de relevage sont de préférence associés à la fermeture avant 200.

Selon le mode de réalisation représenté sur la figure 1, ces moyens de relevage comprennent d'une façon générale, des câbles ou sangles 290 accrochés d'une part en partie inférieure de la fermeture avant, par exemple sur la rangée de jupes 230 la plus intérieure, et associés d'autre part à un treuil 292 supporté par la structure sustentée 12. En outre selon une variante représentée sur la figure 1, un treuil 400 permet le relevage de l'enveloppe 260.

Dans un tel cas, des éléments souples formant bavette sont là encore disposés sur les extrémités latérales de la jupe avant pour glisser sur la paroi latérale de quilles respectivement associées.

Selon un mode de réalisation considéré actuellement comme préférentiel, les éléments souples, formant bavette sont formés, comme représenté sur la figure 12, d'une pluralité de rangées de baguettes anti-friction 270, rectilignes et discontinues, décalées longitudinalement d'une rangée à l'autre. Ces baguettes anti-friction 270 sont plus précisément disposées sur la surface extérieure des voiles 234 latéraux. De préférence, les baguettes anti-friction 270 sont inclinées sur l'horizontale de façon similaire aux génératrices de lobes 232.

En outre, des trous de lubrification d'air 272 sont prévus dans les parois latérales 234 afin de limiter le frottement entre les baguettes anti-friction 270 et les parois latérales des quilles 20.

Comme représenté sur la figure 13, la section droite des baguettes anti-friction 270, considérée perpendiculairement à leur extension générale, est de préférence sensiblement triangulaire, la pointe de cette section reposant contre les surfaces latérales des quilles 20.

Bien entendu, la présente invention n'est aucunement limitée aux modes de réalisation qui viennent d'être décrits mais s'étend à toute variante conforme à son esprit.

De préférence, des éléments d'étanchéité

formant bavette 402 sont disposés sur les extrémités latérales de l'enceinte supérieure 210 et de l'enveloppe complémentaire 260, comme représenté sur la figure 8.

Par exemple, les surfaces latérales internes des quilles 20 peuvent être non verticales.

Dans un tel cas, la géométrie des jupes multilobées 230 et 250 est adaptée en conséquence. Pour cela, par exemple, les lobes latéraux des jupes peuvent être de forme générale tronconique pour assurer un contact étroit entre la fermeture avant et les quilles latérales afin de limiter au mieux les fuites. De façon similaire, la géométrie de l'enceinte supérieure 210 sera aisément adaptée à la géométrie des quilles latérales 20.

De préférence, les fermetures sont réalisées en tissu souple enduit de néoprène.

## Revendications

1. Navire à effet de surface du type comportant une structure sustentée (12) munie de deux quilles latérales (20), un dispositif de fermeture arrière (100) et un dispositif de fermeture avant (200) aptes à coopérer avec les quilles latérales (20) pour délimiter un coussin central de sustentation (300) alimenté par un générateur d'air sous pression (50), des premiers moyens formant conduits (54) reliant le dispositif de fermeture arrière et le générateur d'air sous pression (50), pour assurer le gonflage de l'enceinte, des seconds moyens formant conduits (58) reliant le générateur d'air sous pression (50) au coussin central (300) pour assurer une alimentation principale de celui-ci, la fermeture arrière (100) étant réalisée au moins partiellement en un matériau souple, comprend au moins une enceinte d'extension horizontale délimitée vers l'avant par un voile interne (102) incliné vers le haut en rapprochement du centre du coussin central (300), caractérisé par le fait que :

- des moyens de communication (150) sont prévus entre l'enceinte et le coussin central (300) pour assurer une alimentation secondaire de celui-ci, les moyens formant conduits (54, 58) ainsi que les moyens de communication (150) étant adaptés pour assurer le gonflage de l'enceinte sous une pression supérieure à la pression du coussin central et en combinaison le générateur présente une caractéristique de fonctionnement pression/débit à faible pente pour contribuer à limiter les variations de pression dans le coussin quelles que soient les conditions de navigation.

2. Navire à effet de surface selon la revendication 1, caractérisé par le fait que les moyens formant conduits (54, 58) et les moyens de communication (150) sont adaptés pour définir une perte de charge relative µAR entre l'enceinte et le coussin central (300) comprise entre 0,07 et 0,15, la perte de charge µAR étant définie par la relation :

$$\mu AR = (PbAR - Pc)/PbAR,$$ dans laquelle :

- PbAR représenté la pression moyenne en statique dans l'enceinte (100) et,
- Pc représente la pression en statique dans le coussin central (300).

3. Navire à effet de surface selon l'une des revendications 1 ou 2, caractérisé par le fait que l'enceinte arrière (100) est formée par superposition d'une pluralité de chambres adjacentes (122, 124, 134, 136, 138) d'extension horizontale, en communication.

4. Navire à effet de surface selon l'une des revendications 1 ou 2, caractérisé par le fait que l'enceinte (100) est formée d'une paroi extérieure formée d'une pluralité de lobes (112, 114, 116) d'extension horizontale, reliés chacun à la structure sustentée (12) par des liens (118, 120) et dont le lobe supérieur (112) est relié directement à la structure (12), et dont le lobe inférieur (116) comporte un prolongement interne (102) incliné vers le haut en rapprochement du centre du coussin central (300).

5. Navire à effet de surface selon l'une des revendications 1 à 4, caractérisé par le fait que le générateur d'air sous pression (50) comprend au moins deux unités (50a, 50b) reliées chacune, d'une part par l'intermédiaire de seconds moyens formant conduits (58a, 58b) au coussin central (300), d'autre part par l'intermédiaire de premiers moyens formant conduits (54a, 54b) à l'enceinte (100).

6. Navire à effet de surface selon l'une des revendications 1 à 5 comprenant deux unités (50a, 50b), caractérisé en ce que les unités (50a, 50b) sont respectivement disposées sur chaque bord du navire de telle sorte qu'une unité puisse assurer à elle seule la sustentation du navire, l'unité du bord opposé à celle en fonctionnement étant obturée par des clapets antiretour (62a ou 62b).

7. Navire à effet de surface selon l'une des revendications 1 à 6, caractérisé par le fait que des moyens de communication (150) sont prévus dans le voile interne (102) incliné vers le haut en rapprochement du coussin central afin d'assurer un débit dans les premiers moyens formant conduits (54a, 54b) du même ordre de grandeur que celui des seconds moyens formant conduits 58a, 58b.

8. Navire à effet de surface selon l'une des revendications 1 à 6, caractérisé par le fait que les moyens de communication (150) sont adjacents à la surface inférieure (14) de la structure sustentée (12).

9. Navire à effet de surface selon l'une des reventions 4 à 8, caractérisé par le fait que des panneaux semi-planants (160) généralement horizontaux à l'utilisation sont fixés sur la partie inférieure du lobe inférieur (116), pour assurer le suivi de la surface libre au passage des vagues.

10. Navire à effet de surface selon l'une des revendications 1 à 9, caractérisé par le fait que des orifices de vidange (162) sont ménagés dans

la partie inférieure de l'enceinte (100).

11. Navire à effet de surface selon l'une des revendications 1 à 10, caractérisé par le fait que le générateur d'air sous pression (50) présente une caractéristique débit/pression telle que la conductance statique globale du système d'alimentation dQ/dPc soit telle que :

$dQ/dPc_N \geqslant 2{,}5\ Q/Pc_N$ où Q est le débit total de sustentation et Pc est la pression du coussin au point de fonctionnement nominal.

12. Navire à effet de surface selon l'une des revendications 1 à 10, caractérisé par le fait que le générateur d'air sous pression (50) est un ventilateur du type hélicocentrifuge, dont la vitesse de rotation spécifique est inférieure à 70.

13. Navire à effet de surface selon l'une des revendications 1 à l2, caractérisé par le fait que les moyens formant conduits (52) comprennent une canalisation à embranchement dont le tronc commun (64) est raccordé au générateur d'air sous pression (50), une première branche (54) généralement rectiligne et qui constitue les premiers moyens formant conduits est raccordée à l'enceinte (100) et une second branche incurvée (58) qui constitue les seconds moyens formant conduits est raccordée au coussin central (300).

14. Navire à effet de surface selon la revendication 13, caractérisé par le fait qu'un volet mobile (70) est inséré sur la canalisation (52) au niveau de l'embranchement pour régler la répartition du débit d'air issu du générateur entre les deux branches (54, 58).

15. Navire à effet de surface selon l'une des revendications 1 à 14, caractérisé par le fait qu'un système de volets (72) est disposé sur les seconds moyens formant conduits (58).

16. Navire à effet de surface selon la revendication 15 caractérisé en ce que les volets (72a, 72b) sont fermés pour assurer l'obturation des seconds moyens formant conduits (58) en mode de navigation sur coque.

17. Navire à effet de surface selon l'une quelconque des revendications 1 à 16 caractérisé en ce que les premiers moyens formant conduits de communication (54) alimentent l'enceinte (100) au travers d'un système d'aubage (56a, 56b).

18. Navire à effet de surface selon l'une quelconque des revendications 1 à 17 prise en combinaison avec la rev. 5 dont la structure sustentée est constituée par un caisson de liaison intercoque, caractérisé en ce que les unités (50a, 50b) et les premiers et les seconds moyens formant conduits (54a, 54b, 58a, 58b) sont disposés à l'intérieur dudit caisson, les moyens formant conduit étant réalisés selon une disposition sensiblement horizontale.

19. Navire à effet de surface selon la revendication 18 caractérisé en ce que les unités (50a, 50b) sont constituées par des ventilateurs à axe vertical dont l'ouïe d'aspiration est disposée horizontalement à la partie supérieure du caisson, formant pont.

20. Navire à effet de surface selon l'une quelconque des revendications 1 à 19 caractérisé en ce que la fermeture avant (200) est apte à réguler le débit de fuite sur l'avant quelque soient les conditions de navigation et à participer au rappel en tangage du navire.

21. Navire à effet de surface selon l'une des revendications 1 à 20, caractérisé par le fait que des moyens de relevage (190, 192, 290, 292) sont associés aux fermetures, en vue d'un relevage de celles-ci pour navigation sur coque.

22. Navire à effet de surface selon la revendication 21, caractérisé par le fait que les moyens de relevage comprennent des câbles (190, 290) fixés en partie inférieure des fermetures et associés à des treuils (192, 292) supportés par la structure sustentée.

23. Navire à effet de surface selon l'une des revendications 1 à 22, caractérisé par le fait que des éléments souples (180) formant bavettte sont disposés sur les extrémités latérales de l'enceinte formant fermeture arrière pour glisser sur la paroi latérale des quilles respectivement associée.

**Patentansprüche**

1. Bodeneffektboot mit einer Tragstruktur (12) mit zwei Seitenkielen (20) einer hinteren Abschlussvorrichtung (100) und einer vorderen Abschlussvorrichtung (200), die zur Begrenzung eines von einem Drucklufterzeuget (50) gespeisten zentralen Tragkissens mit den Seitenkielen (20) zusammenwirken können, wobei erste Leitungen (54) bildende Organe die hintere Abschlussvorrichtung und den Drucklufterzeuger (50) verbinden, um das Aufblasen der Zelle zu gewährleisten; zweite Leitungen (58) bildende Organe den Drucklufterzeuger (50) mit den Zentralkissen (300) zur Gewährleistung einer Hauptversorgung desselben verbinden; der hintere Abschluss (100) wenigstens teilweise aus einem nachgiebigen Werkstoff besteht und wenigstens eine sich in horizontaler Richtung erstreckende Zelle umfasst, die nach vorn durch einen inneren Schleier (102) begrenzt ist der gegen die Mitte des Zentralkissens (300) schräg nach oben verläuft, dadurch gekennzeichnet, dass zwischen der Zelle und dem Zentralkissen (300) Verbindungsorgane (150) vorgesehen sind, um eine sekundäre Versorgung desselben zu sichern, wobei die die Leitungen (54, 58) bildenden Organe sowie die Verbindungsorgane (150) zur Gewährleistung des Aufblasens der Zelle für einen Druck angepasst sind, der hoher ist als der Druck des Zentralkissens und dass damit der Drucklufterzeuger eine Druck/Durchsatz-Arbeitskennlinie mit geringer Steilheit aufweist, um unter allen Navigationsbedingungen zur Begrenzung der Druckschwankungen in dem Rissen beizutragen.

2. Bodeneffektboot nach Anspruch 1, dadurch gekennzeichnet, dass die die Leitungen (54, 58) bildenden Organe und die Verbindungsorgane (150) derart angepasst sind, dass sie einen relativen Druckverlust µAR zwischen der Zelle

und dem Zentralkissen (300) definieren, der zwischen 0,07 und 0,15 liegt, wobei der Druckverlust µAR durch die nachstehende Beziehung definiert ist :

µAR (PbAR - Pc)/PbAR

mit :
- PbAR mittlerer statischer Druck in der Zelle (100) und
- Pc statischer Druck in dem Zentralkissen (300).

3. Bodeneffektboot nach Anspruch 1 oder 2, dadurch gekennzeichnet, dass die hintere Zelle (100) durch Übereinander lagerung mehrerer miteinander in Verbindung stehender, sich horizontal erstreckender, benachbarter Kammern (122, 124, 134, 136, 138) gebildet ist.

4. Bodeneffektboot nach Anspruch 1 oder 2, dadurch gekennzeichnet, dass die Zelle (100) von einer äusseren Wand gebildet wird, die aus mehreren horizontalen Lappen (112, 114, 116) besteht, welche jeweils durch Verbindungsglieder (118, 120) mit der Tragstruktur (12) verbunden sind und von denen der obere Lappen (112) unmittelbar an die Tragstruktur (12) angeschlossen ist, während der untere Lappen (116) eine schräg nach oben zur Mitte des Zentralkissens (300) verlaufende innere Verlängerung (102) aufweist.

5. Bodeneffektboot nach einem der vorstehenden Ansprüche 1 bis 4, dadurch gekennzeichnet, dass der Drucklufterzeuger (50) wenigstens zwei Einheiten (50a, 50b) umfasst, die jeweils einerseits über die Leitungen (58a, 58b) bildende zweite Organe mit dem Zentralkissen (300) und andererseits über die Leitungen (54a, 54b) bildende erste Organe mit der Zelle (100) verbunden sind.

6. Bodeneffektboot nach einem der vorstehenden Ansprüche 1 bis 5 mit zwei Einheiten (50a, 50b), dadurch gekennzeichnet, dass die Einheiten (50a, 50b) jeweils an beiden Bordseiten des Schiffes derart angeordnet sind, dass eine Einheit allein den Auftrieb des Schiffes gewährleisten kann, wobei die Einheit auf der Bordseite, die der in Betrieb befindlichen Einheit gegenüberliegt, durch Rückschlagventile (62a, 62b) verschlossen ist.

7. Bodeneffektboot nach einem der vorstehenden Ansprüche 1 bis 6, dadurch gekennzeichnet, dass Verbindungsorgane (150) in dem schräg nach oben zur Mitte des Zentralkissens verlaufenden inneren Schleier (102) vorgesehen sind, um in den die Leitungen (54a, 54b) bildenden ersten Organen einen Durchsatz zu gewährleisten, der in derselben Grössenordnung liegt wie der der die Leitungen (58a, 58b) bildenden zweiten Organe.

8. Bodeneffektboot nach einem der vorstehenden Ansprüche 1 bis 6, dadurch gekennzeichnet, dass die Verbindungsorgane (150) an die untere Fläche (14) der Tragstruktur (12) angrenzen.

9. Bodeneffektboot nach einem der vorstehenden Ansprüche 1 bis 8, dadurch gekennzeichnet, dass im allgemeinen bei der Verwendung horizontal gerichtete, halbschwebende Platten (160) am unteren Teil des unteren Lappens (116) befestigt sind, um die Nachführung der freien Oberfläche beim Durchgang der Wellen zu sichern.

10. Bodeneffektboot nach einem der vorstehenden Ansprüche 1 bis 9, dadurch gekennzeichnet, dass Ablassöffnungen (162) in dem unteren Teil der Zelle (100) angebracht sind.

11. Bodeneffektboot nach einem der vorstehenden Ansprüche 1 bis 10, dadurch gekennzeichnet, dass der Drucklufterzeuger (50) eine derartige Durchsatz/Druckkennlinie aufweist, dass der globale statische Leitwert des Versorgungssystems dQ/dPc derart ist, dass $dQ/dPc_N \geqslant 2{,}5\ Q/Pc_N$, worin Q den gesamten Auftriebsdurchsatz und Pc den Druck des Kissens im Nennarbeitspunkt bezeichnen.

12. Bodeneffektboot nach einem der vorstehenden Ansprüche 1 bis 10, dadurch gekennzeichnet, dass der Drucklufterzeuger (50) ein Zentrifugal-Schraubengebläse ist, dessen spezifische Drehzahl unter 70 liegt.

13. Bodeneffektboot nach einem der vorstehenden Ansprüche 1 bis 12, dadurch gekennzeichnet, dass die die Leitungen (52) bildenden Organe eine Abzweigleitung umfassen, deren gemeinsamer Abschnitt (64) an den Drucklufterzeuger (50) angeschlossen ist, wobei ein erster im allgemeinen geradliniger Zweig (54), der die die Leitungen bildenden ersten Organe darstellt, an die Zelle (100) und ein zweiter gekrümmter Zweig (58), der die die Leitungen bildenden zweiten Organe darstellt, an das Zentralkissen (300) angeschlossen sind.

14. Bodeneffektboot nach Anspruch 13, dadurch gekennzeichnet, dass eine bewegliche Klappe (70) in die Leitung (52), auf der Ebene der Abzweigung, eingeschaltet ist, um die Verteilung des von dem Drucklufterzeuger gelieferten Luftdurchsatzes auf die beiden Zweigleitungen (54, 58) zu regeln.

15. Bodeneffektboot nach einem der vorstehenden Ansprüche 1 bis 14, dadurch gekennzeichnet, dass ein Klappensystem (72) auf den die Leitungen (58) bildenden zweiten Organen angeordnet ist.

16. Bodeneffektboot nach Anspruch 15, dadurch gekennzeichnet, dass die Klappen (72a, 72b) bei der Navigation auf dem Schiffsrumpf zur Verschliessung der die Leitungen (58) bildenden zweiten Organe geschlossen sind.

17. Bodeneffektboot nach einem der vorstehenden Ansprüche 1 bis 16, dadurch gekennzeichnet, dass die die Verbindungsleitungen (54) bildenden ersten Organe die Zelle (100) durch ein Schaufelsystem (56a, 56b) versorgen.

18. Bodeneffektboot nach einem der vorstehenden Ansprüche 1 bis 17 in Verbindung mit dem Anspruch 5, dessen Tragstruktur aus einem Verbindungskasten zwischen den Rumpfteilen besteht, dadurch gekennzeichnet,

dass die Einheiten (50a, 50b) und die die Leitungen (54a, 54b, 58a, 58b) bildenden ersten und zweiten Organe im Innern des genannten Kastens angeordnet sind, wobei die die Leitungen bildenden Organe gemäss einer merklich horizontalen Anordnung ausgeführt sind.

19. Bodeneffektboot nach Anspruch 18, dadurch gekennzeichnet, dass die Einheiten (50a, 50b) aus Gebläsen mit vertikaler Achse bestehen, deren Saugöffnung horizontal im oberen Teil des ein Deck bildenden Kastens angeordnet ist.

20. Bodeneffektboot nach einem der vorstehenden Ansprüche 1 bis 19, dadurch gekennzeichnet, dass der vordere Abschluss (200) unter allen Navigationsbedingungen den Leckdurchsatz nach vorn regeln und zum Ausgleich der Stampfbewegungen des Schiffes beitragen kann.

21. Bodeneffektboot nach einem der vorstehenden Ansprüche 1 bis 20, dadurch gekennzeichnet, dass den Abschlüssen Hebemittel (190, 192, 290, 292) zugeordnet sind, um die genannten Abschlüsse zwecks Navigation auf dem Schiffsrumpf anzuheben.

22. Bodeneffektboot nach Anspruch 21, dadurch gekennzeichnet, dass die Hebemittel Kabel (190, 290) umfassen, die am unteren Teil der Abschlüsse befestigt und von der Tragstruktur getragenen Winden (192, 292) zugeordnet sind.

23. Bodeneffektboot nach einem der vorstehenden Ansprüche 1 bis 22, dadurch gekennzeichnet, dass lappenförmige nachgiebige Elemente (180) an den seitlichen Endflächen der den hinteren Abschluss bildenden Zelle angeordnet sind, um auf der jeweils zugeordneten Seitenwand der Kiele zu gleiten.

**Claims**

1. A surface-effect ship of the type including a supported structure (12) equipped with two side keels (20), an aft closure (100) and a fore closure (200) capable of co-operating with the side keels (20) for delimiting a central supporting cushion (300) supplied by a presurized-air generator (50), first duct-forming means (54) connecting the aft closure (200) to the pressurized-air generator (50) for inflating the enclosure, seccnd duct-forming means (58) connecting the pressurized-air generator (50) to the central cushion (300) for ensuring a first supply of the latter, the aft closure (100) being made, at least partly, of a flexible material, comprises at least one horizontally extending enclosure delimited in its fore part by an inner veil (102) sloped upwardly towards the centre of the central cushion (300), characterized by the fact that :

- communications means (150) are provided between the enclosure and the central cushion (300) for ensuring a secondary supply of the latter, the duct-forming means (54, 58) and the communication means (150) being capable of inflating the enclusure under a higher pressure than that of the central cushion and in combination the generator presents a low-slope pressure/ delivery operating characteristic for contributing to reduce pressure variations in the cushion whatever the navigation conditions.

2. A surface-effect ship as claimed in Claim 1, characterized by the fact that the duct-forming means (54, 58) and the communication means (150) are capable of defining a relative loss of pressure $\mu AR$ between the enclosure and the central cushion (300) ranging from 0.07 to 0.15, the loss of pressure $\mu AR$ being determined by the following relation :

$\mu AR = (PbAR - Pc)/PbAR$, where :

- PbAR is the mean static pressure in the inclosure (100) and
- Pc is the static pressure in the central cushion (300).

3. A surface-effect ship as claimed in any of Claims 1 or 2, characterized by the fact that the aft enclosure (100) is formed by superimposing a plurality of horizontally-extending and communicating adjacent chambers (122, 124, 134, 136, 138).

4. A surface-effect ship as claimed in Claims 1 or 2, characterized by the fact that the enclosure (100) consists of an outer wall formed by a plurality of horizontally-extending lobes (112, 114, 116) each of which is connected to the supported structure (12) by links (118, 120) and the upper lobe (112) of which is directly connected to the structure (12) and the lower lobe (116) of which includes an internal extension (102) sloped upwardly towards the centre of the central cushion (300).

5. A surface-effect ship as claimed in any of Claims 1 to 4, characterized by the fact that the pressurized-air generator (50) includes at least two units (50a, 50b) each of which is connected to the central cushion (300) through second duct-forming means (58a, 58b) on the one hand, and to the enclosure (100) through first duct-forming means (54a, 54b), on the other hand.

6. A surface-effect ship as claimed in any of Claims 1 to 5 including two units (50a, 50b), characterized in that the units (50a, 50b) are respectively located on each side of the ship so that a single unit can support the ship, the unit on the side opposite to that of the operating unit being obturated by check valves (62a or 62b).

7. A surface-effect ship as claimed in any of Claims 1 to 6, characterized by the fact that communication means (150) are provided in the inner veil (102) sloped upwardly towards the central cushion so as to ensure a delivery in the first duct-forming means (54a, 54b) on the same order of magnitude as that of the second duct-forming means (58a, 58b).

8. A surface-effect ship as claimed in any of Claims 1 to 6, characterized by the fact that the communication means (150) are adjacent to the

lower surface (14) of the supported structure (12).

9. A surface-effect ship as claimed in any of Claims 1 to 8, characterized by the fact that half-floating panels (160), generally horizontal in operation, are attached to the lower portion of the lower lobe (116) in order to follow up the free surface when crossing waves.

10. A surface-effect ship as claimed in any of Claims 1 to 9, characterized by the fact that drain holes (162) are pierced through the lower portion of the enclosure (100).

11. A surface-effect ship as claimed in any of Claims 1 to 10, characterized by the fact that the delivery/pressure characteristic of the pressurized-air generator (50) is such that the overall static conductance of the supply system dQ/dPc is such that :

$dQ/dPc_N \geqslant 2.5\ Q/Pc_N$, where Q is the total lift delivery and Pc is the cushion at the point of nominal operation.

12. A surface-effect ship as claimed in any of Claims 1 to 10, characterized by the fact that the pressurized-air generator (50) is a fan of the outward-flow type the specific rotation speed of which is smaller than 70.

13. A surface-effect ship as claimed in any of Claims 1 to 12, characterized by the fact that the duct-forming means (52) include a multiway duct with a common section (64) connected to the pressurized-air generator (50), a first branch (54), usually linear, connected to the enclosure (100) and a curved second branch (58) which constitutes the second duct-forming means connected to the central cushion (300).

14. A surface-effect ship as claimed in Claim 13, characterized by the fact that a mobile flap (70) is inserted into the duct-forming means (52) at the location of the multiway duct in order to regulate the distribution of the air supplied by the generator between the two branches (54, 58).

15. A surface-effect ship as claimed in any of Claims 1 to 14, characterized by the fact that the flap system (72) is located on the second duct forming means (58).

16. A surface-effect ship as claimed in Claim 15, characterized by the fact that the flaps (72a, 72b) are closed for obturating the second duct-forming means (58) in the hull-navigation mode.

17. A surface-effect ship as claimed in any of Claims 1 to 16, characterized in that the first communication duct-forming means (54) supply the enclosure (100) through a guide-vane system (56a, 56b).

18. A surface-effect ship as claimed in any of Claims 1 to 17 in combination with Claim 5, the supported structure of which consists of an inter-hull connection chamber, characterized in that the units (50a, 50b) and the first and second duct-forming means (54a, 54b, 58a, 58b) are located inside said chamber, the duct-forming means presenting a substantially horizontal layout.

19. A surface-effect ship as claimed in Claim 18, characterized in that the units (50a, 50b) consist of vertical-axis fans the air intake of which is located horizontally at the upper section of the deck-forming chamber.

20. A surface-effect ship as claimed in any of Claims 1 to 19, characterized in that the fore closure (200) is capable of regulating the forward leak rate whatever the navigation conditions and participating in the ship pitch damping.

21. A surface-effect ship as claimed in any of Claims 1 to 20, characterized by the fact that raising means (190, 192, 290, 292) are associated with the closures with a view to raising the latter for the navigation on the hull.

22. A surface-effect ship as claimed in Claim 21, characterized by the fact that the raising means include cables (190, 290) attached to the lower portion of the closures and associated with winches (192, 292) carried by the supported structure.

23. A surface-effect ship as claimed in any of Claims 1 to 22, characterized by the fact that flexible elements (180) forming an edge strip are installed on the side ends of the enclosure forming an aft closure so as to slide along the respectively associated side wall of the keels.

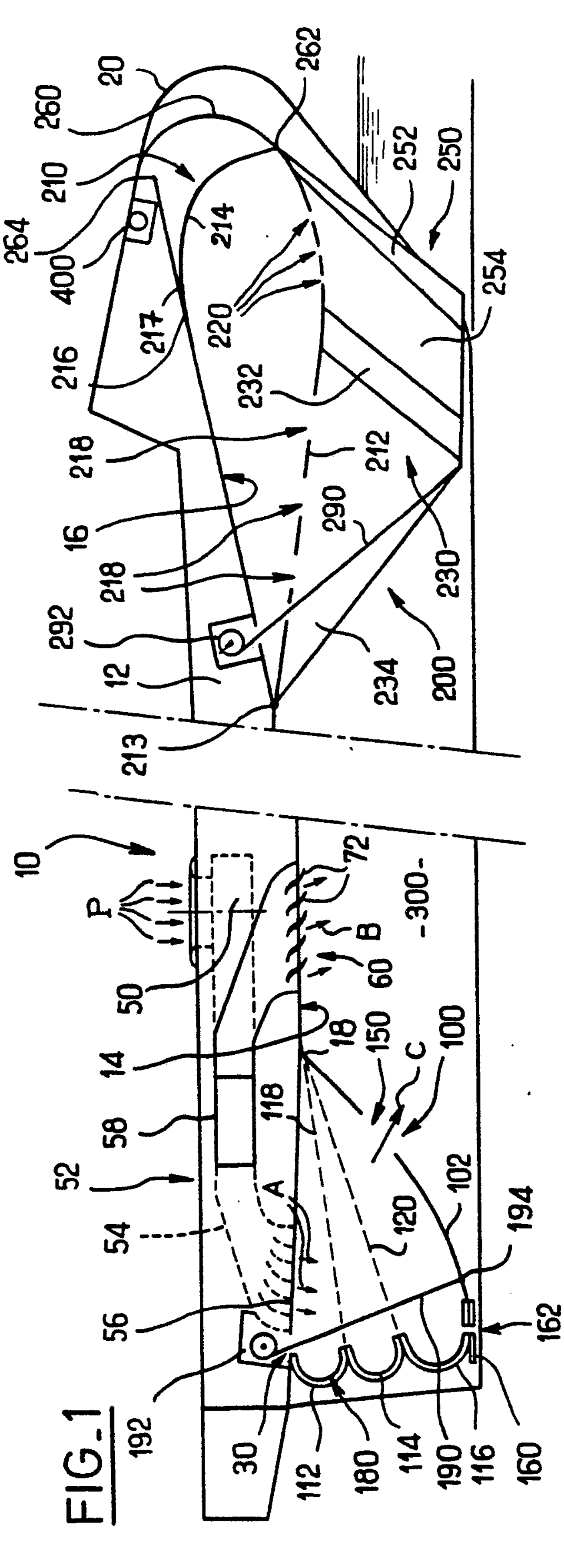


FIG_1

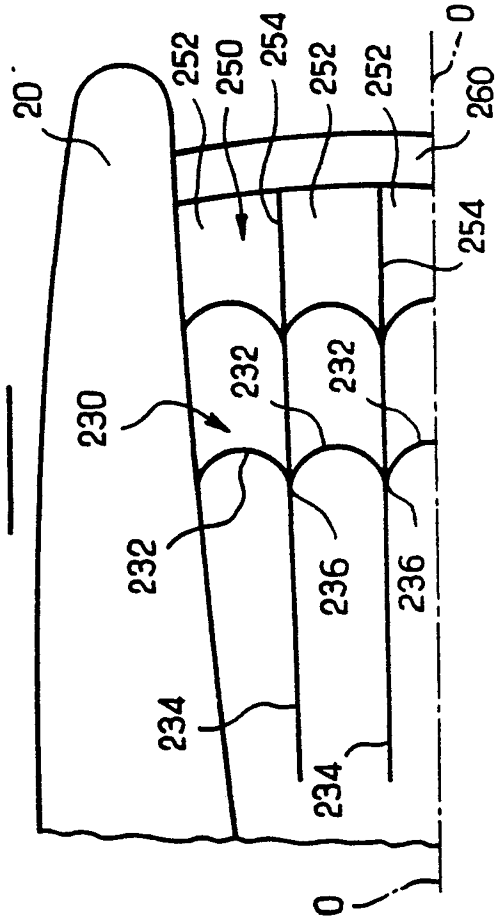


FIG_3

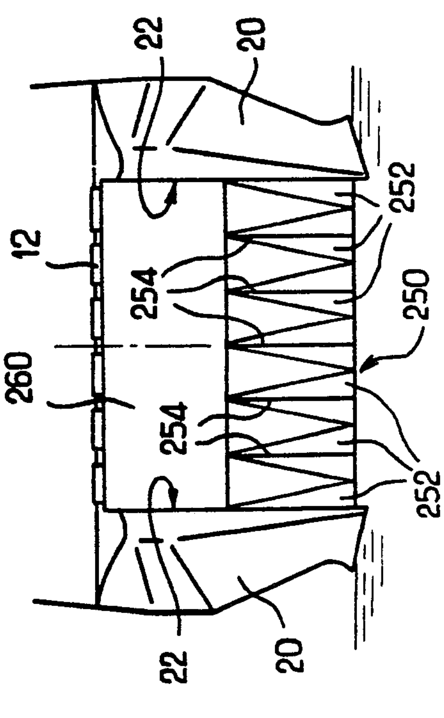


FIG_2

FIG_4

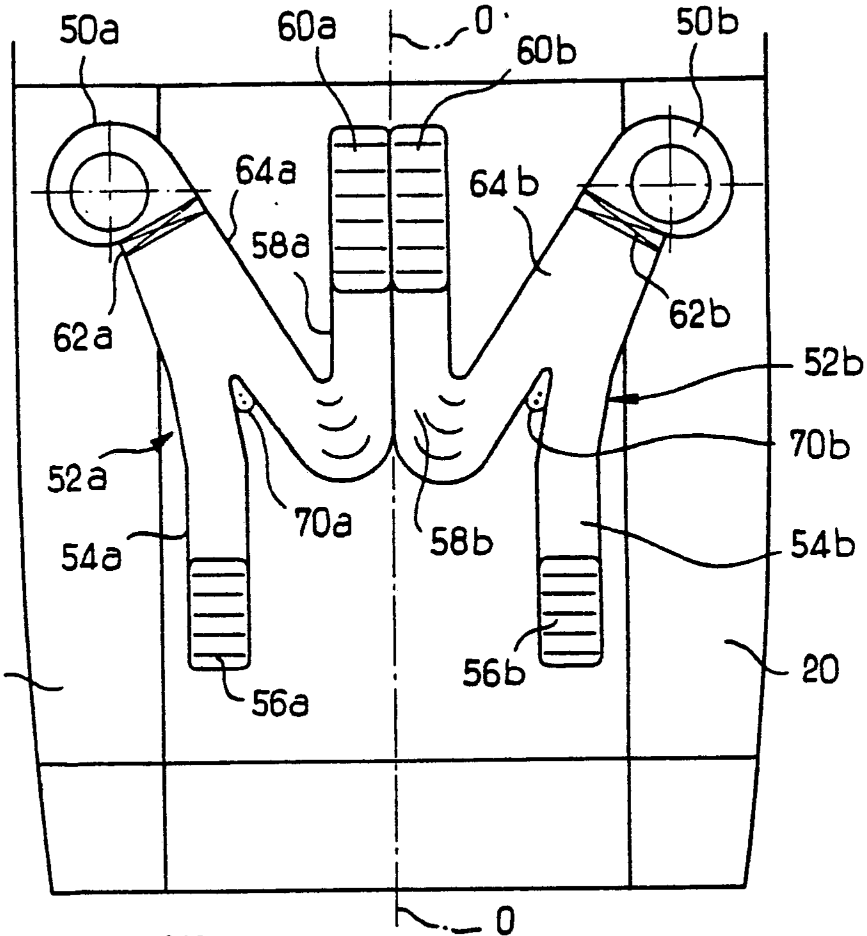


FIG_8

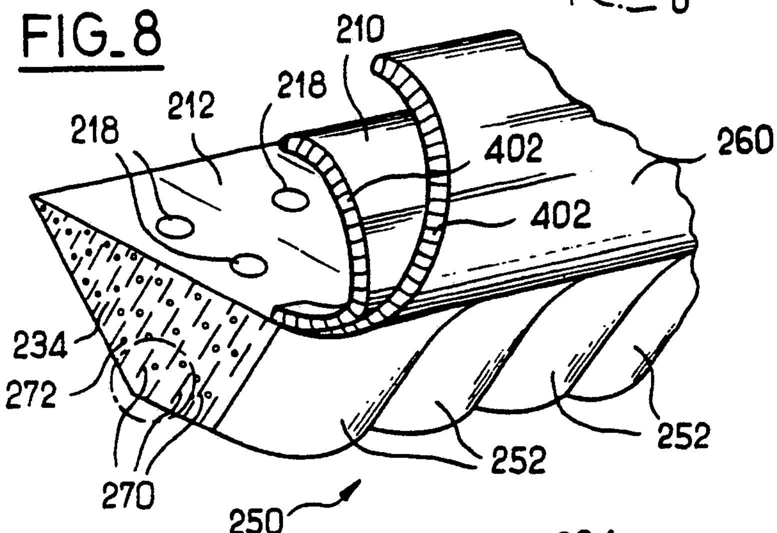


FIG_12

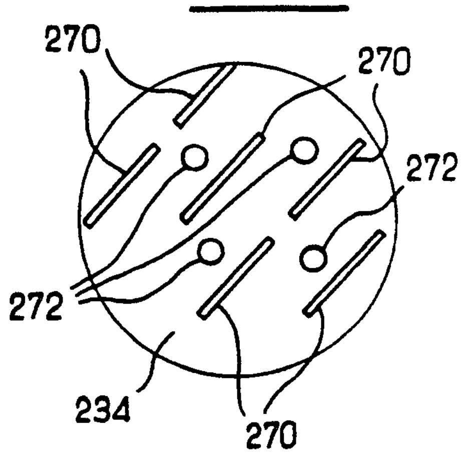


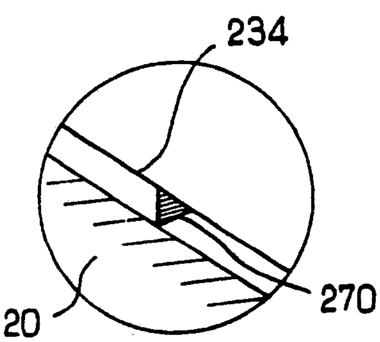


FIG_13

FIG_5

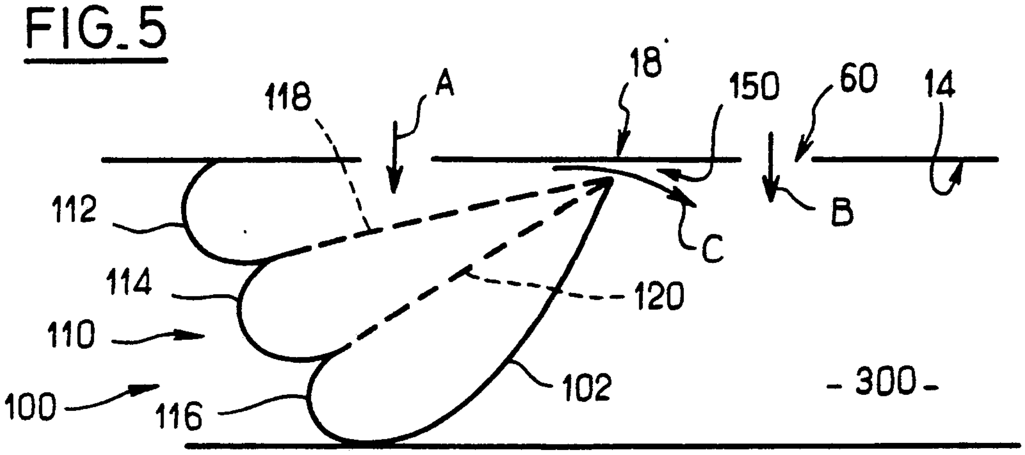


FIG_6a

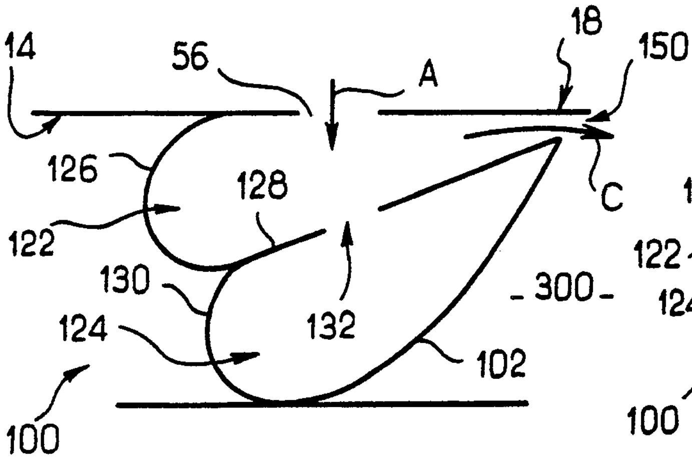


FIG_6b

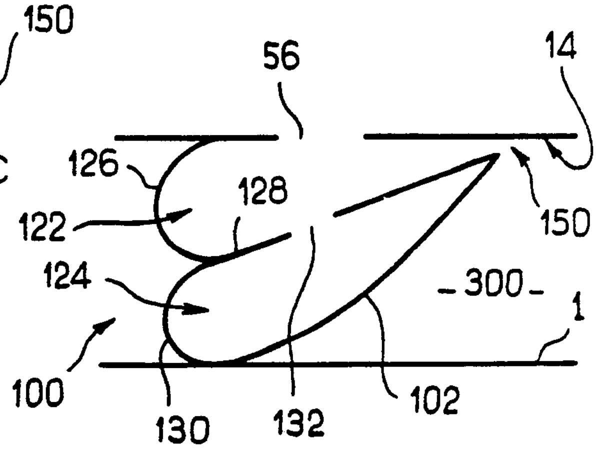


FIG_7

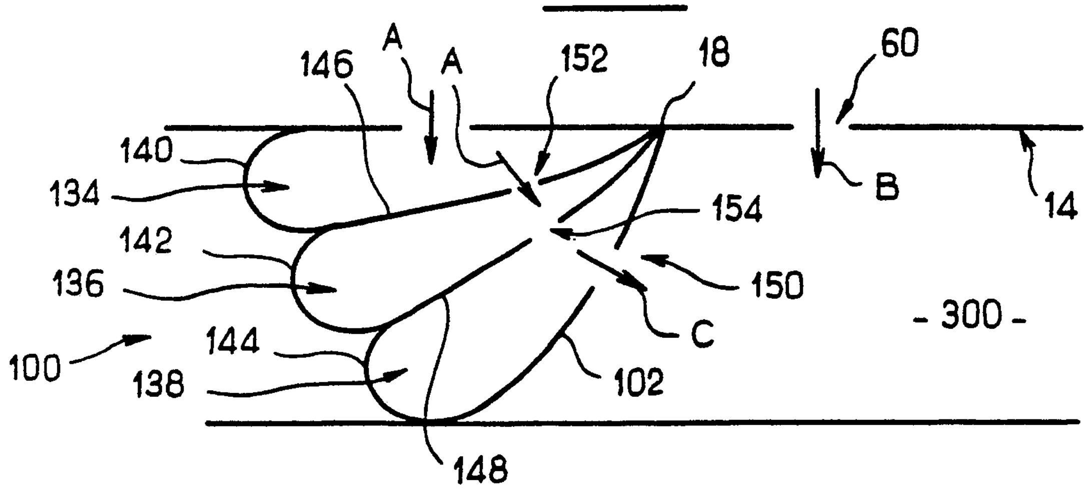

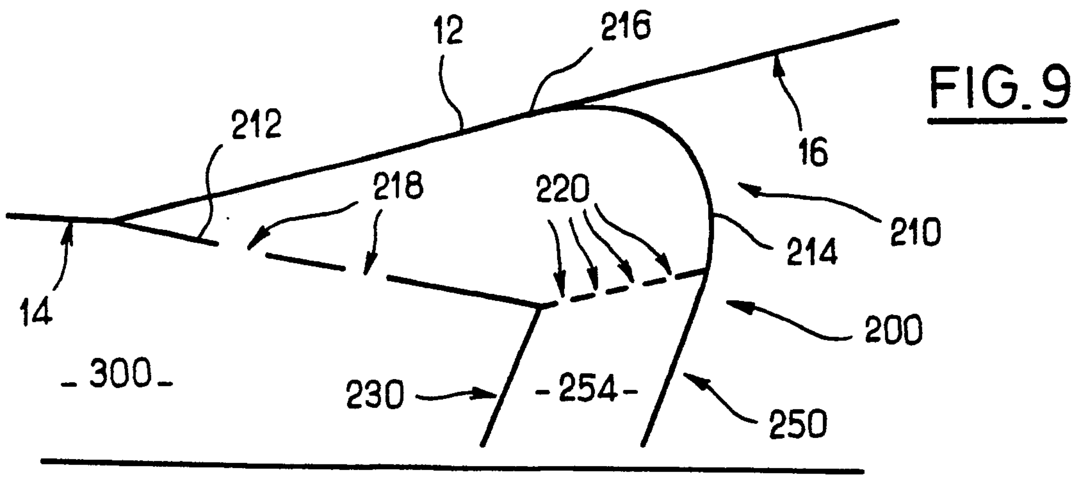


FIG.9

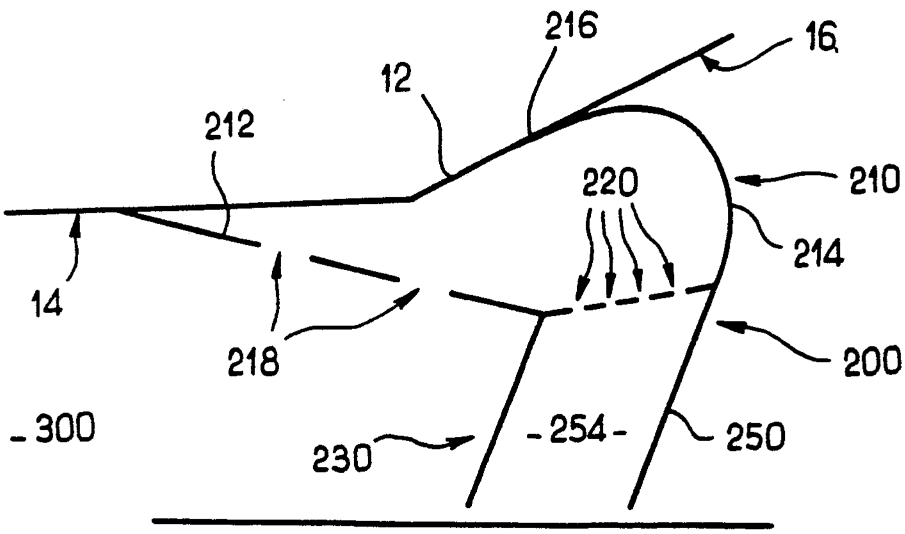


FIG.10

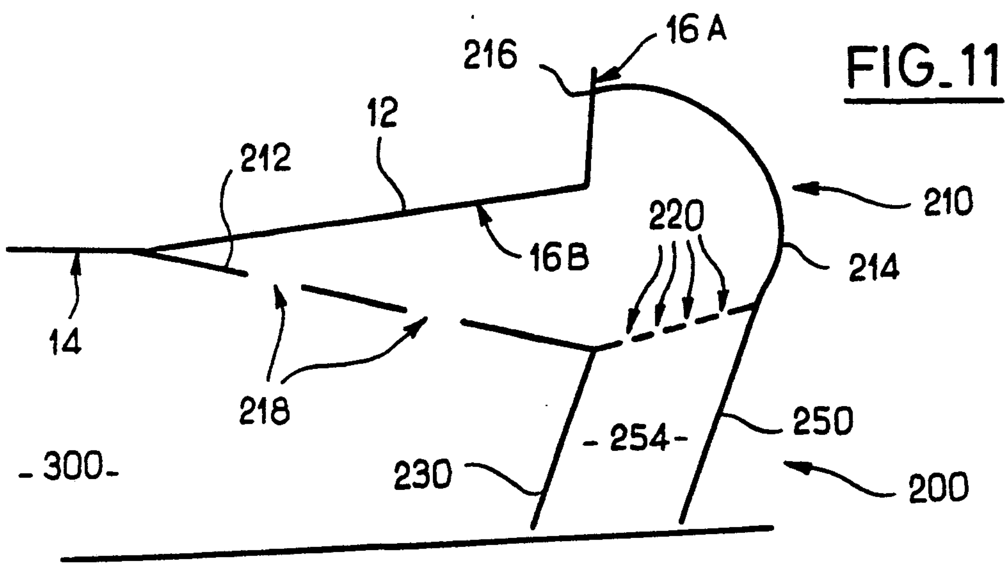


FIG.11

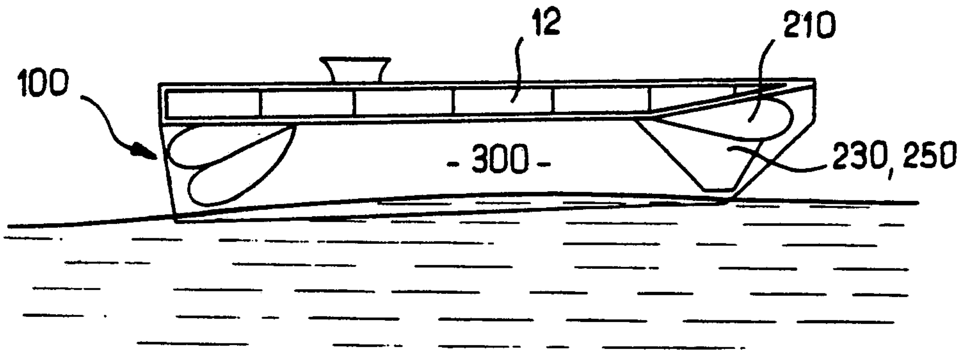


FIG. 14a

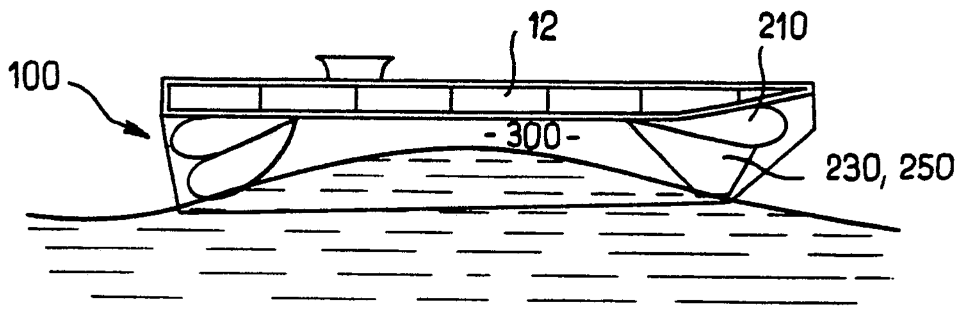


FIG. 14b

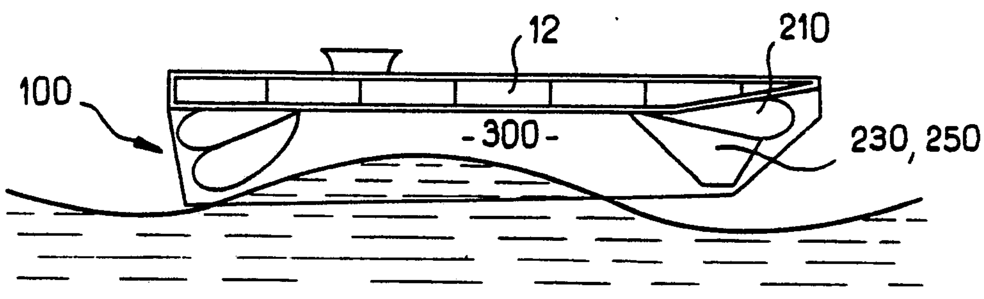


FIG. 14c

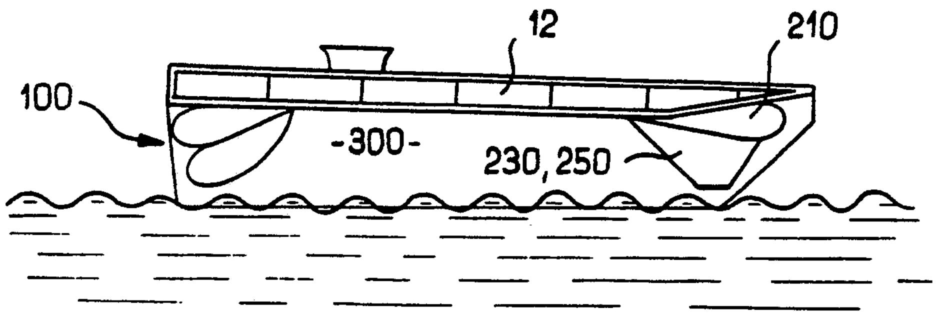


FIG. 14d